# EUROPÄISCHE PATENTSCHRIFT

(11) **EP 2 569 812 B1**
(45) Veröffentlichungstag und Bekanntmachung des Hinweises auf die Patenterteilung: **11.05.2016**
(21) Anmeldenummer: 11708290.9
(22) Anmeldetag: 16.03.2011
(51) Int. Cl.: H01M 2/36

(54) **TROCKNUNGSEINRICHTUNG ZUR MINDERUNG DER FEUCHTIGKEIT EINES GASES, GEHÄUSE, VERFAHREN ZUR HERSTELLUNG DES GEHÄUSES, BATTERIE UND KRAFTFAHRZEUG**
DRYING DEVICE FOR REDUCING THE MOISTURE CONTENT OF A GAS, HOUSING, METHOD FOR PRODUCING THE HOUSING, BATTERY AND MOTOR VEHICLE
DISPOSITIF DESSICCATEUR DESTINÉ À ABAISSER L'HUMIDITÉ D'UN GAZ, BOÎTIER, PROCÉDÉ POUR LA FABRICATION DU BOÎTIER, BATTERIE ET VÉHICULE À MOTEUR

(30) Priorität: 11.05.2010 DE 102010028861
(43) Veröffentlichungstag der Anmeldung: 20.03.2013
(73) Patentinhaber: Samsung SDI Co., Ltd., Gyeonggi-do (KR); Robert Bosch GmbH, 70442 Stuttgart (DE)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/053930
(87) Internationale Veröffentlichungsnummer: WO 2011/141199

(56) Entgegenhaltungen:
- DE-A1-102008 034 698

## Beschreibung

Die vorliegende Erfindung betrifft eine Trocknungseinrichtung zur Minderung der Feuchtigkeit eines Gases in einem Gehäuseinnenraum, insbesondere in einem Batteriegehäuseinnenraum, wobei die Trocknungseinrichtung einen Trockenmittelkörper sowie eine Fixierungseinrichtung zur form- und/oder kraftschlüssigen Fixierung des Trockenmittelkörpers umfasst, mittels derer der Trockenmittelkörper im Gehäuseinnenraum oder zumindest einen Teil der inneren Oberfläche des Gehäuses ausbildend positionierbar ist. Dabei ist die Fixierungseinrichtung derart ausgestaltet, dass der Trockenmittelkörper reversibel fixierbar ist.

Die Erfindung betrifft weiterhin ein Gehäuse, insbesondere ein Batteriegehäuse, welches wenigstens eine erfindungsgemäße Trocknungseinrichtung umfasst. Außerdem betrifft die Erfindung ein Verfahren zur Herstellung des erfindungsgemäßen Gehäuses. Ergänzt wird die Erfindung durch eine Batterie, welche wenigstens ein erfindungsgemäßes Gehäuse umfasst sowie durch ein Kraftfahrzeug, welches wenigstens eine erfindungsgemäße Batterie umfasst.

### Stand der Technik

Um die Sicherheit von Lithium-Ionen-Batteriemodulen zu gewährleisten sowie zur Optimierung der Batterieleistung und Lebensdauer sind die Batteriezellen optimalerweise innerhalb eines definierten Temperaturbereiches zu betreiben. Insbesondere bei hoher Leistungsaufnahme bzw. Leistungsabgabe muss das Aufheizen der Batteriezellen über eine bestimmte Betriebstemperatur vermieden werden und betriebsbedingt auftretende Wärme abgeführt werden. Zu diesem Zweck werden üblicherweise Kühlsysteme eingesetzt.

Außerdem kann es erforderlich sein, zu kühle Batteriezellen auf eine gewünschte Betriebstemperatur zu erwärmen. Auch zu diesem Zweck wird ein Temperierungssystem eingesetzt. Zur Realisierung der gewünschten Betriebstemperatur ist somit vorzugsweise eine Anlage zu verwenden, mittels derer Wärme zugeführt sowie auch Wärme abgeführt werden kann.

Zur Kühlung der Batteriemodule wird üblicherweise Luft oder Wasser als Medium eingesetzt, wobei das jeweilige Medium die Wärme aufnimmt und aus den Zellen abführt. Wässrige Kühlmedien werden oftmals durch eine Bodenplatte geleitet, die thermisch zum Beispiel über Bleche mit den Batteriezellen verbunden ist. Bei Nutzung von Luft als Kühlmedium wird diese zwischen den Zellen hindurchgeführt. Insbesondere bei der Luftkühlung ist ein relativ hoher Aufwand zur Aufbereitung hinsichtlich Entfeuchtung und Filterung der Kühlluft sowie der Strömungsführung durch das Gehäuse zu den Batteriezellen notwendig. Bei einem wassergekühlten Batteriesystem tritt insbesondere das Problem der Kondenswasserbildung innerhalb des Gehäuses auf.

Zur Verminderung von im Gehäuse anfallender Feuchtigkeit bzw. Kondenswasser ist es bekannt, die im Gehäuse befindliche Luft mittels Trockenmittel zu trocknen.

Dazu sind entsprechende Vorkehrungen zu treffen, wie zum Beispiel die Positionierung des Trockenmittels im Gehäuse an geeigneter Stelle.

Aus der Druckschrift DE 10 2008 034698 A1 ist eine Batterie mit einem Batteriegehäuse, umfassend ein Feuchtigkeit sorbierendes Element bekannt. Dabei ist das Feuchtigkeit sorbierende Element mittels einer lösbaren kraft- und/oder formschlüssigen Verbindung in ein Inneres des Batteriegehäuses ragend an diesem befestigt.

### Offenbarung der Erfindung

Erfindungsgemäß wird eine Trocknungseinrichtung zur Minderung der Feuchtigkeit eines Gases in einem Gehäuseinnenraum, insbesondere in einem Batteriegehäuseinnenraum, zur Verfügung gestellt, wobei die Trocknungseinrichtung einen Trockenmittelkörper sowie eine Fixierungseinrichtung zur form- und/oder kraftschlüssigen Fixierung des Trockenmittelkörpers umfasst, mittels derer der Trockenmittelkörper im Gehäuseinnenraum oder zumindest einen Teil der inneren Oberfläche des Gehäuses ausbildend positionierbar ist. Dabei ist die Fixierungseinrichtung derart ausgestaltet, dass der Trockenmittekörper reversibel fixierbar ist. Erfindungsgemäß ist die Trocknungseinrichtung als ein Druckausgleichsmittel ausgestaltet.

### Vorteile der Erfindung

Das Trockenmittel im Gehäuseinnenraum verhindert die Kondenswasserbildung bzw. nimmt Feuchtigkeit des Gases im Gehäuseinnenraum auf, so dass es nicht zu einer Kondenswasserbildung und somit nicht zu Kurzschlüssen und/oder elektrochemischer Korrosion kommen kann. Die Fixierung und Positionierung des Trockenmittelkörpers im Gehäuse bzw. im Gehäuseinnenraum erfolgt bevorzugt dadurch, dass die Fixierungseinrichtung mit dem Trockenmittelkörper sowie mit dem Gehäuse verbunden wird, wobei die mechanische Verbindung zwischen Fixierungseinrichtung und Gehäuse lösbar ist und somit der Trockenmittelkörper nach seiner Montage wieder demontiert werden kann. Die Fixierungseinrichtung ist dabei bevorzugt ein Element mit einem Außengewindeabschnitt zum Einschrauben der Trocknungseinrichtung in eine Gehäusebohrung mit Innengewinde. In alternativer Ausgestaltung kann die Trocknungseinrichtung mittels eines Bajonettverschlusses am bzw. im Gehäuse befestigt sein.

Als Trockenmittel ist bevorzugt ein Silikal-Gel bzw. ein Molekularsieb anzuwenden, vorzugsweise ausgebildet als Absorptionsmittel für Feuchtigkeit nach DIN 55473.

Die erfindungsgemäße Trocknungseinrichtung lässt sich bevorzugt in Batteriegehäusen, insbesondere in Gehäusen von Lithium-Ionen-Batterien einsetzen, die mittels einer Kühleinrichtung gekühlt werden. Der Vorteil der erfindungsgemäßen Trocknungseinrichtung liegt in der einfachen und schnellen Austauschbarkeit des Trockenmittels, welche dadurch gegeben sind, dass das Trockenmittel einen kompakten Körper formt bzw. in einem solchen angeordnet ist. Auf Grund der Reversibilität der Befestigung ist somit in einfacher Weise in einem Gehäuse einer Batterie, insbesondere einer Lithium-Ionen-Batterie, die notwendige Trockenheit durch einen Austausch des Trockenmittels bzw. des Trockenmittelkörpers realisierbar. Dadurch fallen lediglich geringe Wartungskosten an.

In einer Ausgestaltung der Erfindung ist vorgesehen, dass der Trockenmittelkörper einen Hohlkörper und Trockenmittel aufweist, wobei das Trockenmittel im Hohlkörper aufgenommen ist. Das heißt, dass das Trockenmittel nicht die Oberfläche des Trockenmittelkörpers ausbildet, sondern dass die Oberfläche dieses Trockenmittelkörpers durch den Hohlkörper ausgebildet ist, in dem das Trockenmittel angeordnet ist. Der Hohlkörper bzw. die Wände des Hohlkörpers können durch ein Sieb oder Membranen realisiert sein oder sie können feste Wände mit Perforierungen sein. Derartige feste Wände sollten vorzugsweise aus Aluminium oder Kunststoff hergestellt sein. In dieser Ausgestaltung bietet es sich an, dass am Hohlkörper und strömungstechnisch mit diesem verbunden ein Auffangbehälter angeordnet ist, zum Auffangen von Kondensat, welches nicht von Trockenmittel absorbiert wird. Ein derartiger Auffangbehälter kann gegebenenfalls reversibel am Hohlkörper angeordnet sein, um seinen Austausch oder seine Entleerung unabhängig von der Behandlung des Trockenmittels im Hohlkörper zu ermöglichen.

Gemäß einer alternativen bevorzugten Ausführungsform der Erfindung ist vorgesehen, dass der Trockenmittelkörper ein im Wesentlichen aus Trockenmittel ausgebildeter Vollmaterialkörper ist. Das heißt, dass in dieser Ausgestaltung das Trockenmittel auch die Oberfläche des Trockenmittelkörpers ausbildet. Der Vollmaterialkörper kann dabei Poren zur Vergrößerung der Oberfläche bzw. zum effizienten Eindringen des Gases und/oder Bewehrungselemente zur Verbesserung der Stabilität des Trockenmittelkörpers aufweisen.

In bevorzugter Ausgestaltung ist der Trockenmittelkörper fest mit der Fixierungseinrichtung verbunden, wobei an der Fixierungseinrichtung, dem Trockenmittelkörper gegenüberliegend, eine Montagehilfseinrichtung angeordnet ist zur Einleitung einer Montage- oder Demontagekraft bzw. eines Montage- oder Demontagemomentes. Die Fixierung des Trockenmittelkörpers im Gehäuseinnenraum erfolgt somit durch Betätigung der Montagehilfseinrichtung, zum Beispiel durch Einleiten eines Drehmomentes in einen die Montagehilfseinrichtung darstellenden Außensechskant, so dass die Fixierungseinrichtung in eine Gehäusebohrung eingeschraubt wird und somit der Trockenmittelkörper im Gehäuseinnenraum fixiert ist. Statt eines Außensechskantes als Montagehilfseinrichtung kann auch ein Schlitz oder ein Innensechskant zur Einleitung eines Drehmomentes zwecks Einschrauben der Trocknungseinrichtung in die Gehäusewand verwendet werden. In weiterer Alternative ist ein Bajonettverschluss zur Positionierung und Fixierung des Trockenmittelkörpers im Gehäuse verwendbar.

In weiterer bevorzugter Ausgestaltung ist vorgesehen, dass an der Seite der Trocknungseinrichtung, die dem Trockenmittelkörper gegenüberliegt, eine Zustandsanzeige zur Anzeige des Grades der Feuchtigkeits-Sättigung des Trockenmittels angeordnet ist.

Die Zustandsanzeige, die zur Anzeige des Grades der Sättigung des Trockenmittels dient, kann zum Beispiel eine Farbanzeige sein, bei der sich die Farbe je nach Sättigungsgrad ändert. So kann zum Beispiel in sehr feuchten Einsatzgebieten oder auch nach unsachgemäßer Reinigung, zum Beispiel mittels eines Hochdruckreinigers, eine etwaige Erhöhung der Feuchtigkeit des Gases im Gehäuseinnenraum detektiert und durch Auswechseln des Trockenmittels darauf reagiert werden. Somit ist im Bedarfsfalle eine noch schnellere und bedarfsgerechtere Reduzierung der Feuchtigkeit des Gases im Gehäuseinnenraum realisierbar. Vorteilhafterweise ist die Zustandsanzeige von außerhalb des Gehäuses mit dem bloßen Auge erkennbar.

Alternativ oder hinzukommend kann im Trockenmittelkörper auch ein Sensor zur Erfassung des Grades der Sättigung des Trockenmittels mit Feuchtigkeit angeordnet sein. Dies ist ein Sensor, der das Verhältnis des Volumens des Trockenmittels zur Masse des im Trockenmittel aufgenommenen Wasserdampfes feststellt. Ab einem bestimmten Sättigungsgrad bzw. ab einem bestimmten kritischen Feuchtigkeitszustand ist das Trockenmittel auszutauschen. Vorzeitige Sättigung lässt dabei auf ein Leck im Gehäuse und/oder auf eine andere außergewöhnliche Situation schließen, die zu einer erhöhten Feuchtigkeit des Gases im Gehäuse führt.

Die Trocknungseinrichtung umfasst ein Druckausgleichsventil, so dass im Falle einer Unterschreitung einer unteren Grenze eines Druckbereiches die Trocknungseinrichtung durch das Druckausgleichsventil von außen Gas, insbesondere Luft, durch das Trockenmittel in das Gehäuse einlässt, wobei die Feuchtigkeit des durch das Trockenmittel einströmenden Gases gemindert wird, so dass auf diesem Wege ebenfalls Kondenswasserbildung verhindert und damit die Gefahr des Auftretens von Kurzschlüssen und/oder elektrochemischer Korrosion verringert wird.

Es wird erfindungsgemäß zudem ein Gehäuse, insbesondere ein Batteriegehäuse, zur Verfügung gestellt, welches eine Gehäuseöffnung und eine erfindungsgemäße Trocknungseinrichtung umfasst, wobei die Trocknungseinrichtung in der Gehäuseöffnung derart reversibel fixiert ist, dass der Trockenmittelkörper der Trocknungseinrichtung in den Gehäuseinnenraum hineinragt oder zumindest einen Teil der inneren Oberfläche des Gehäuses ausbildet. In dem Gehäuse sind Batteriezellen in so genannten Packs angeordnet. Vorzugsweise ist das Gehäuse ein Gehäuse einer Lithium-Ionen-Batterie.

Die Gehäuseöffnung zur Einbringung der Trocknungseinrichtung ist eine Durchgangsöffnung, wie zum Beispiel eine Durchgangsbohrung, welche vorzugsweise mit einem Innengewinde versehen ist, das komplementär zum Außengewinde der Fixierungseinrichtung der Trocknungseinrichtung ausgestaltet ist. In die Gehäuseöffnung wird die Trocknungseinrichtung von außen eingesetzt und kann aus dieser von außen auch wieder entfernt werden. Somit weist das erfindungsgemäße Gehäuse den Vorteil der einfachen und schnellen Austauschbarkeit von Trocknungsmittel, gegebenenfalls verbunden mit dem Vorteil der Anzeige bzw. Feststellung des geeigneten Zeitpunktes des Austausches des Trockenmittels, auf. Zwecks Erzielung einer Abdichtwirkung zwischen der Trocknungseinrichtung und dem Gehäuse kann wenigstens eine Dichtung vorgesehen sein, oder es können an der Trocknungseinrichtung und/oder am Gehäuse Formelemente oder ein derartiges Material angeordnet sein, welche eine Dichtungswirkung mit dem jeweils anderen, anliegenden Bauteil erzielen können.

In besonderer Ausgestaltung ist vorgesehen, dass im Gehäuseinnenraum wenigstens ein Sensor zur Erfassung der Feuchtigkeit des Gases im Gehäuseinnenraum angeordnet ist. In dieser Ausgestaltung umfasst entweder die Trocknungseinrichtung selbst oder das Gehäuse eine Auswerteeinheit zur Auswertung der vom Sensor generierten Signale. Ein Sensorsignal, das die Information enthält, dass die Sättigung des Trockenmittels erreicht ist und dass das Trockenmittel somit keine Wirkung mehr entfaltet, wird derart von der Auswerteeinheit verarbeitet, dass ein entsprechendes Wartungssignal generiert wird, welches einer Bedienperson die Information gibt, dass der Austausch des Trockenmittels vorzunehmen ist.

Abweichend von der beschriebenen qualitativen Aussage, ob die Sättigung erreicht ist oder nicht, kann durch den Sensor gegebenenfalls auch der aktuelle Grad der Sättigung quantitativ festgestellt werden und ein entsprechendes Signal erstellt werden, welches für eine Bedienperson die Information enthält oder zumindest Rückschlüsse zulässt, wann mit einer Sättigung zu rechnen ist. In dieser Ausgestaltung erlaubt die Erfindung eine bessere Planung des Austauschzeitpunktes und demzufolge geringere Wartungskosten.

Der Sensor ist dabei vorteilhafterweise im Gehäuseinnenraum außerhalb des Trockenmittels angeordnet, wobei jedoch auch die Anordnung des Sensors innerhalb des Trockenmittelkörpers nicht ausgeschlossen sein soll, wobei in diesem Fall der Trockenmittelkörper und der Sensor mit Steckkontakten versehen sein sollten für eine schnelle und einfache Austauschbarkeit des Sensors.

Bei Nutzung einer Auswerteeinheit kann eine als Druckausgleichsmittel ausgestaltete Trocknungseinrichtung ebenfalls mit der Auswerteeinheit gekoppelt sein, so dass bei Feststellung eines Unterdrucks und gegebenenfalls erhöhter Feuchtigkeit des Gases im Gehäuseinnenraum die Auswerteeinheit eine Öffnung des Druckausgleichsmittels veranlasst, so dass einströmende Luft durch das Trockenmittel getrocknet wird und somit die Feuchtigkeit im Gehäuseinnenraum gemindert wird.

Es wird erfindungsgemäß zudem ein Verfahren zur Herstellung des erfindungsgemäßen Gehäuses zur Verfügung gestellt, bei dem ein Gehäuse, insbesondere ein Batteriegehäuse, welches eine Gehäuseöffnung aufweist, zur Verfügung gestellt wird, und außerdem eine erfindungsgemäße Trocknungseinrichtung zur Verfügung gestellt wird und die Trocknungseinrichtung von außen in der Gehäuseöffnung fixiert wird. Vorzugsweise erfolgt die Fixierung durch Einschrauben der Trocknungseinrichtung in die Gehäuseöffnung. Ein Austausch des Trockenmittels erfolgt dadurch, dass die Trocknungseinrichtung von außen aus der Gehäuseöffnung herausgenommen, vorzugsweise herausgeschraubt wird. Anschließend kann eine andere Trocknungseinrichtung mit frischem Trockenmittel wieder in der Gehäuseöffnung angeordnet werden oder es wird, insofern der Trockenmittekörper aus einem Hohlkörper mit daran angeordnetem Trockenmittel besteht, das Trockenmittel in diesem Hohlkörper ausgewechselt oder getrocknet und die Trocknungseinrichtung wieder in die Gehäuseöffnung eingesetzt. Falls der Trockenmittelkörper vollständig aus Trockenmittel ausgebildet ist, kann gegebenenfalls auch das Trockenmittel an der Fixierungseinrichtung ausgewechselt werden und die dadurch regenerierte Trocknungseinrichtung wieder in die Gehäuseöffnung eingesetzt werden. Es ist ersichtlich, dass das erfindungsgemäße Gehäuse mit der erfindungsgemäßen Trocknungseinrichtung eine sehr schnelle und einfache Austauschbarkeit des Trockenmittels im Gehäuse ermöglicht.

Die Erfindung ergänzend wird außerdem eine Batterie zur Verfügung gestellt, welche wenigstens ein erfindungsgemäßes Gehäuse und zumindest eine Batteriezelle umfasst, wobei die Batteriezelle im Gehäuse angeordnet ist. Vorzugsweise ist eine solche erfindungsgemäße Batterie eine Lithium-Ionen-Batterie.

Außerdem wird ein Kraftfahrzeug zur Verfügung gestellt, welches wenigstens eine erfindungsgemäße Batterie umfasst, wobei die Batterie mit dem Antriebssystem des Kraftfahrzeugs verbunden oder verbindbar ist.

Die Auswerteeinheit zur Auswertung der vom Sensor generierten Signale bezüglich der Feuchtigkeit kann ein Element der Batterie als ein Bestandteil des Batterie-Management-Systems sein, oder das Batterie-Management-System kann derart ausgestaltet sein, dass es auch die Funktion der Auswerteeinheit übernimmt. Alternativ kann die Auswerteeinheit ein Bestandteil einer Steuerungseinheit des erfindungsgemäßen Kraftfahrzeugs sein.

### Zeichnung

Vorteilhafte Weiterbildungen sowie Ausführungsbeispiele der Erfindung werden anhand der Zeichnung und der nachfolgenden Beschreibung näher erläutert.

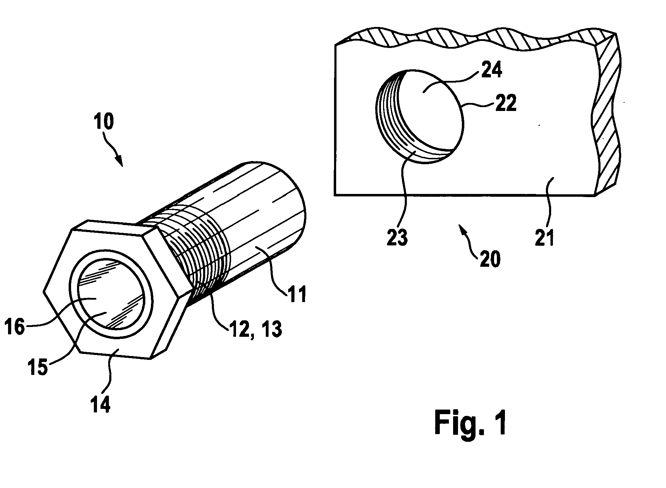

Es zeigt die Figur 1 eine Trocknungseinrichtung sowie einen Ausschnitt eines Gehäuses in perspektivischer Darstellung in einer Situation, in der die Trocknungseinrichtung in die Gehäuseöffnung im Gehäuse einschraubbar ist.

### Ausführungsformen der Erfindung

Die in Figur 1 dargestellte Trocknungseinrichtung 10 umfasst einen Trockenmittelkörper 11, der wie bereits beschrieben durch einen Hohlkörper ausgebildet sein kann, in dem sich Trockenmittel befindet, oder der komplett aus Trockenmaterial bestehen kann. Der Trockenmittelkörper 11 ist an eine Fixierungseinrichtung 12 angeschlossen, die in der dargestellten Variante durch einen Außengewindeabschnitt 13 ausgebildet ist. An die Fixierungseinrichtung 12 schließt sich eine Montagehilfseinrichtung 14 an, die in der dargestellten Variante als ein Außensechskant ausgebildet ist. Die Erfindung ist dabei nicht auf einen Außensechskant eingeschränkt, sondern es können auch alternative Montagehilfseinrichtungen, wie zum Beispiel ein Innensechskant oder auch ein einfacher Schlitz angeordnet sein, die zur Einleitung eines Drehmomentes zwecks Einschrauben der Trocknungseinrichtung 10 in die Gehäuseöffnung 22 dienen können

In weiterer alternativer Ausgestaltung kann die Trocknungseinrichtung 10 auch zum Beispiel mittels eines Bajonettverschlusses im Gehäuse 20 arretiert sein. Generell sind sämtliche reversiblen Befestigungsmöglichkeiten, mit denen zudem eine ausreichende Dichtungswirkung zwischen Trocknungseinrichtung 10 und Gehäuse 20 realisierbar ist zur Fixierung und Positionierung der Trocknungseinrichtung 10 im bzw. am Gehäuse 20 geeignet.

Zentral in der Montagehilfseinrichtung 14 angeordnet ist eine Zustandsanzeige 15. Diese Zustandsanzeige 15 steht mit dem Trockenmittel im Trockenmittelkörper 11 in Verbindung, so dass bei Sättigung des Trockenmittels mit Feuchtigkeit eine farbliche Änderung der Zustandsanzeige 15 feststellbar ist, so dass optisch in einfacher Weise festgestellt werden kann, wann das Trockenmittel auszuwechseln ist.

Ebenfalls bevorzugt zentral in der Montagehilfseinrichtung 14, gegebenenfalls statt der Zustandsanzeige 15 oder hinzukommend, kann ein Druckausgleichsmittel 16 angeordnet sein. Dieses Druckausgleichsmittel 16 ermöglicht eine Gasströmung bei Abweichung des Gasdruckes im Gehäuseinnenraum 24 von einem bestimmten Soll-Bereich durch die Trocknungseinrichtung 10. Insbesondere bei Feststellung eines unerwünschten Unterdruckes im Gehäuseinnenraum 24 öffnet das Druckausgleichsmittel 16, so dass Außenluft durch die Trocknungseinrichtung 10 und somit auch durch das im Trockenmittelkörper 11 angeordnete Trockenmittel in den Gehäuseinnenraum 24 strömt. Dadurch wird erreicht, dass bereits einströmendes Gas in seiner Feuchtigkeit gemindert wird.

Das erfindungsgemäße Gehäuse 20, in welchem die erfindungsgemäße Trocknungseinrichtung 10 eingesetzt ist, umfasst, wie dargestellt, eine Gehäusewand 21, in der die Gehäuseöffnung 22 angeordnet ist. Die Gehäuseöffnung 22 ist vorzugsweise mit einem Innengewinde 23 ausgeführt, welches komplementär zum Außengewindeabschnitt 13 der Trocknungseinrichtung 10 ausgeführt ist. Durch Einschrauben der Fixierungseinrichtung 12 in die Gehäuseöffnung 22 wird somit erreicht, dass der Trockenmittelkörper 10 in den Gehäuseinnenraum 24 hineinragt oder, in Abhängigkeit von der Dicke der Gehäusewand 21, zumindest einen Teil der inneren Oberfläche des Gehäuses 20 ausbildet.

Es ist aus der Figur ersichtlich, dass die Trocknungseinrichtung 10 in einfacher Weise in die Gehäuseöffnung 22 eingeschraubt und auch wieder aus dieser herausgeschraubt werden kann. Es lässt sich somit der Trockenmittelkörper 11 der Trocknungseinrichtung 10 einfach und schnell in den Gehäuseinnenraum 24 einbringen und auch wieder aus diesem entfernen. Es kann somit optimal, insbesondere bei Auswertung eines durch die Zustandsanzeige 15 oder einen integrierten Sensor generierten Signals, das Trockenmittel ausgewechselt werden, so dass effizient und mit minimalem Kostenaufwand erhöhter Feuchtigkeit des Gases im Gehäuseinnenraum 24 und/oder Kondenswasserbildung entgegengewirkt werden kann.

## Patentansprüche

1. Trocknungseinrichtung (10) zur Minderung der Feuchtigkeit eines Gases in einem Gehäuseinnenraum (24), insbesondere in einem Batteriegehäuseinnenraum, wobei die Trocknungseinrichtung (10) einen Trockenmittelkörper (11) sowie eine Fixierungseinrichtung (12) zur form- und/ oder kraftschlüssigen Fixierung des Trockenmittelkörpers (11) umfasst, mittels derer der Trockenmittelkörper (11) im Gehäuseinnenraum (24) oder zumindest einen Teil der inneren Oberfläche des Gehäuses (20) ausbildend positionierbar ist, wobei die Fixierungseinrichtung (12) derart ausgestaltet ist, dass der Trockenmittelkörper (11) reversibel fixierbar ist,
**dadurch gekennzeichnet,**
**dass** die Trocknungseinrichtung als ein Druckausgleichsmittel (16) ausgestaltet ist.

2. Trocknungseinrichtung nach Anspruch 1, bei der der Trockenmittelkörper (11) einen Hohlkörper und Trockenmittel aufweist, wobei das Trockenmittel im Hohlkörper aufgenommen ist.

3. Trocknungseinrichtung nach Anspruch 1, bei der der Trockenmittelkörper (11) ein im Wesentlichen aus Trockenmittel ausgebildeter Vollmaterialkörper ist.

4. Trocknungseinrichtung nach wenigstens einem der vorhergehenden Ansprüche, wobei der Trockenmittelkörper (11) fest mit der Fixierungseinrichtung (12) verbunden ist und an der Fixierungseinrichtung (12) dem Trockenmittelkörper (11) gegenüberliegend eine Montagehilfseinrichtung (14) angeordnet ist zur Einleitung einer Montage- oder Demontagekraft bzw. eines Montage- oder Demontagemomentes.

5. Trocknungseinrichtung nach wenigstens einem der vorhergehenden Ansprüche, die an der Seite, die dem Trockenmittelkörper (11) gegenüberliegt, eine Zustandsanzeige (15) zur Anzeige des Grades der Sättigung des Trockenmittels aufweist.

6. Trocknungseinrichtung nach wenigstens einem der vorhergehenden Ansprüche, die ein Druckausgleichsventil umfasst, welches im Fall einer Unterschreitung einer unteren Grenze eines Soll-Druckbereiches von außen Gas, insbesondere Luft, durch das Trockenmittel in das Gehäuse einlassen kann.

7. Gehäuse (20), insbesondere Batteriegehäuse, **dadurch gekennzeichnet, dass** es eine Gehäuseöffnung (22) und eine Trocknungseinrichtung (10) gemäß wenigstens einem der Ansprüche 1 bis 6 umfasst, die in der Gehäuseöffnung (22) derart reversibel fixiert ist, dass der Trockenmittelkörper (11) der Trocknungseinrichtung (10) in den Gehäuseinnenraum (24) hineinragt oder zumindest einen Teil der inneren Oberfläche des Gehäuses (20) ausbildet.

8. Gehäuse nach Anspruch 7, das wenigstens einen im Gehäuseinnenraum (24) angeordneten Sensor zur Erfassung der Gasfeuchtigkeit im Gehäuseinnenraum (24) umfasst.

9. Verfahren zur Herstellung des Gehäuses (20) gemäß einem der Ansprüche 7 oder 8, bei dem ein Gehäuse (20), insbesondere ein Batteriegehäuse, welches eine Gehäuseöffnung (22) aufweist, sowie eine Trocknungseinrichtung (10) gemäß einem der Ansprüche 1 bis 6 zur Verfügung gestellt wird und die Trocknungseinrichtung (10) von außen in der Gehäuseöffnung (22) fixiert wird.

10. Batterie, welche wenigstens ein Gehäuse (20) gemäß einem der Ansprüche 7 oder 8 und zumindest eine Batteriezelle umfasst, wobei die Batteriezelle im Gehäuse (20) angeordnet ist.

11. Kraftfahrzeug, welches wenigstens eine Batterie gemäß Anspruch 10 umfasst, wobei die Batterie mit einem Antriebssystem des Kraftfahrzeugs verbunden ist.

## Claims

1. Drying device (10) for reducing the moisture content of a gas in a housing interior (24), in particular in a battery housing interior, the drying device (10) comprising a drying agent body (11) and a fixing device (12) for the form-fitting and/or force-fitting fixing of the drying agent body (11), by means of which the drying agent body (11) can be positioned in the housing interior (24) or so as to form at least part of the inner surface of the housing (20), the fixing device (12) being configured in such a way that the drying agent body (11) can be fixed reversibly,
**characterized in that**
the drying device is configured as a pressure compensating means (16).

2. Drying device according to Claim 1, in which the drying agent body (11) has a hollow body and drying agent, wherein the drying agent is accommodated in the hollow body.

3. Drying device according to Claim 1, in which the drying agent body (11) is a solid material body formed substantially from drying agent.

4. Drying device according to at least one of the preceding claims, wherein the drying agent body (11) is firmly connected to the fixing device (12) and an assembly aid device (14) for introducing an assembling or disassembling force or assembling or disassembling torque is arranged on the fixing device (12) opposite the drying agent body (11).

5. Drying device according to at least one of the preceding claims which has a condition indicator (15) on the side which is opposite the drying agent body (11), for indicating the level of saturation of the drying agent.

6. Drying device according to at least one of the preceding claims, which comprises a pressure compensating valve which, in the event of undershooting a lower limit of an intended pressure range, is able to let gas, in particular air, into the housing from outside through the drying agent.

7. Housing (20), in particular a battery housing, **characterized in that** it comprises a housing opening (22) and a drying device (10) according to at least one of Claims 1 to 6, which is fixed reversibly in the housing opening (22) in such a way that the drying agent body (11) of the drying device (10) projects into the housing interior (24) or forms at least part of the inner surface of the housing (20).

8. Housing according to Claim 7, which comprises at least one sensor arranged in the housing interior (24) to measure the moisture content of the gas in the housing interior (24).

9. Method for producing the housing (20) according to either of Claims 7 and 8, in which a housing (20), in particular a battery housing, which has a housing opening (22) and also a drying device (10) according to one of Claims 1 to 6, is provided, and the drying device (10) is fixed in the housing opening (22) from outside.

10. Battery, which comprises at least one housing (20) according to either of Claims 7 and 8 and at least one battery cell, wherein the battery cell is arranged in the housing (20).

11. Motor vehicle, which comprises at least one battery according to Claim 10, wherein the battery is connected to a drive system of the motor vehicle.

## Revendications

1. Dispositif dessiccateur (10) destiné à abaisser l'humidité d'un gaz dans un espace intérieur de boîtier (24), notamment dans un espace intérieur de boîtier de batterie, le dispositif dessiccateur (10) comprenant un corps de moyen dessiccateur (11) ainsi qu'un dispositif de fixation (12) pour la fixation par complémentarité de formes et/ou de forces du corps de moyen dessiccateur (11) à l'aide duquel le corps de moyen dessiccateur (11) peut être positionné dans l'espace intérieur de boîtier (24) ou de façon à former au moins une partie de la surface intérieure du boîtier (20), le dispositif de fixation (12) étant configuré de telle sorte que le corps de moyen dessiccateur (11) peut être fixé de façon réversible, **caractérisé en ce que** le dispositif dessiccateur prend la forme d'un moyen de compensation de pression (16).

2. Dispositif dessiccateur selon la revendication 1, dans lequel le corps de moyen dessiccateur (11) comporte un corps creux et un moyen dessiccateur, le moyen dessiccateur étant logé dans le corps creux.

3. Dispositif dessiccateur selon la revendication 1, dans lequel le corps de moyen dessiccateur (11) est un corps de matériau plein réalisé pour l'essentiel à partir de moyen dessiccateur.

4. Dispositif dessiccateur selon au moins l'une quelconque des revendications précédentes, le corps de moyen dessiccateur (11) étant relié fixement au dispositif de fixation (12) et un dispositif auxiliaire de montage (14) étant disposé au niveau du dispositif de fixation (12) à l'opposé du corps de moyen dessiccateur (11) de façon à introduire une force de montage ou de démontage et/ou un couple de montage ou de démontage.

5. Dispositif dessiccateur selon au moins l'une quelconque des revendications précédentes comportant au niveau du côté opposé au corps de moyen dessiccateur (11) un affichage d'état (15) servant à l'affichage du degré de saturation du moyen dessiccateur.

6. Dispositif dessiccateur selon au moins l'une quelconque des revendications précédentes, comprenant une soupape d'équilibrage de pression pouvant laisser entrer du gaz provenant de l'extérieur, notamment de l'air, dans le boîtier, de façon à le laisser passer à travers le moyen dessiccateur, en cas de passage en dessous d'une limite inférieure d'une plage de pression théorique.

7. Boîtier (20), notamment boîtier de batterie, **caractérisé en ce qu'**il comprend une ouverture de boîtier (22) et un dispositif dessiccateur (10) selon au moins l'une quelconque des revendications 1 à 6, ledit dispositif étant fixé de façon réversible dans l'ouverture de boîtier (22), de telle sorte que le corps de moyen dessiccateur (11) du dispositif dessiccateur (10) rentre dans l'espace intérieur de boîtier (24) ou forme au moins une partie de la surface intérieure du boîtier (20).

8. Boîtier selon la revendication 7, comprenant au moins un capteur disposé dans l'espace intérieur de boîtier (24) pour détecter l'humidité gazeuse dans l'espace intérieur de boîtier (24).

9. Procédé de fabrication du boîtier (20) selon l'une quelconque des revendications 7 ou 8, dans lequel un boîtier (20), notamment un boîtier de batterie, comportant une ouverture de boîtier (22) ainsi qu'un dispositif dessiccateur (10) selon l'une quelconque des revendications 1 à 6, est mis à disposition et dans lequel le dispositif dessiccateur (10) est fixé depuis l'extérieur dans l'ouverture de boîtier (22).

10. Batterie, comprenant au moins un boîtier (20) selon l'une quelconque des revendications 7 ou 8 et au moins une cellule de batterie, la cellule de batterie étant disposée dans le boîtier (20).

11. Véhicule automobile, comprenant au moins une batterie selon la revendication 10, la batterie étant reliée à un système d'entraînement du véhicule automobile.
